# EUROPEAN PATENT APPLICATION

(11) **EP 3 163 506 A1**
(43) Date of publication of application: **03.05.2017**
(21) Application number: 16195655.2
(22) Date of filing: 26.10.2016
(51) Int. Cl.: G06K 9/00, H04N 5/225, H04N 5/247, H04N 13/02, H04N 13/00

(54) **METHOD FOR STEREO MAP GENERATION WITH NOVEL OPTICAL RESOLUTIONS**

(30) Priority: 27.10.2015 US 201514924075
(71) Applicant: Dura Operating, LLC, Auburn Hills, MI 48326 (US)
(72) Inventor: Thompson, Aaron Evans, Grand Blanc, MI 48439 (US); Gignac, Donald Raymond, Waterford, MI 48327 (US)
(74) Representative: Bungartz Christophersen Partnerschaft mbB Patentanwälte

(57) **Abstract**

A stereo mapping system and method for use in an automotive vehicle is provided. The stereo mapping system and method is configured to perform stereo mapping of cameras having different resolutions and different fields of view. The first camera provides intermediate to long range imagery which is processed for object detection. An image processor matches the resolution of a corresponding frame of the second camera with an unused frame of the first camera, wherein the corresponding frame and the unused frame correlate in time. The unused frame is an image taken by the first camera that in which no object detection data is written on.

## Description

### FIELD OF THE INVENTION

The present invention is related to a system and method of stereo mapping and in particular a system and method of stereo mapping using two cameras having different resolutions.

### BACKGROUND OF THE INVENTION

Stereo mapping is a system involving two cameras that allows camera images to be processed to determine information that may be difficult to obtain using a single camera. For instance, stereo mapping allows depth of an object to be determine utilizing the offset geometry of the camera images. In particular, epipolar geometrical matrices may be used to determine the depth of an object which can be used by an active control system of an automotive vehicle process a collision warning or make a corrective action.

Currently, stereo mapping systems require two cameras of the same resolution. Thus, the cameras are configured to provide similar fields of view, which limit the mapping capabilities. Thus, additional cameras are required to capture a greater field of view which adds costs to vehicle production. Accordingly, it remains desirable to have a stereo mapping system wherein multiple cameras of different fields of view may be used so as to reduce production costs.

### SUMMARY OF THE INVENTION

A stereo mapping system and method for use in an automotive vehicle is provided. The stereo mapping system and method is configured to provide three dimensional distance of an object relative to the automotive vehicle. The system includes a first camera and a second camera. The first camera is configured to detect objects within an intermediate and long range distance of the automotive vehicle. The second camera is configured to detect objects within a short range of the automotive vehicle, relative to the first camera. The first camera has a first camera resolution and a first field of view. The second camera has a second camera resolution and a second field of view. The second camera resolution is different than the first camera resolution. The second field of view is wider than the first field of view.

The system further includes an image processor. The image processor includes a first processing segment and a second processing segment. The first processing segment is configured to process images of the first camera so as to detect an object. In particular, the first processing segment captures an image frame at the end of a processing period and processes the used image frame so as to detect an image for a plurality of used frames, whereas the remaining frames of the first camera are unused frames.

The second processing segment is configured to process the second camera. The second processing segment processes a corresponding frame of the second camera. The corresponding frame corresponds in time to an unused frame of the first camera. The second processing segment processes the corresponding frame so as to match the resolution of corresponding frame with the unused frame of the first camera.

The system further includes an image mapping segment. The image mapping segment matches a predetermined pixel area of the unused frame of the first camera with a corresponding pixel area of the corresponding frame of the second camera. The image processor is further configured to process the unused frame of the first camera with the corresponding frame of the second camera so as to determine depth and distance of objects within the predetermined pixel area of the unused frame and the corresponding frame.

A method configured to process camera film from a first camera and a second camera so as to perform stereo mapping in an automotive vehicle is also provided. The method includes the steps of providing a first camera having a first camera resolution. The first camera is configured to detect objects within an intermediate and long range. The second camera is configured to detect objects within a short range, relative to the first camera. The first camera has a first camera resolution and a first field of view. The second camera has a second camera resolution and a second field of view, wherein the second camera resolution is different than the first camera resolution. The second field of view is wider than the first field of view.

The method includes the step of providing an image processor. The image processor includes a first processing segment and a second processing segment. The first processing segment is configured to process images of the first camera so as to detect an object. In particular, the first processing segment captures an image frame at the end of a processing period and processes the used image frame so as to detect an image for a plurality of used frames, whereas the remaining frames of the first camera are unused frames.

The second processing segment is configured to process the second camera. The second processing segment processes a corresponding frame of the second camera, the corresponding frame corresponding in time to an unused frame of the first camera, and wherein the second processing segment processes the corresponding frame so as to match the resolution of corresponding frame with the unused frame of the first camera.

The method further includes the step of providing an image mapping segment. The image mapping segment matches a predetermined pixel area of the unused frame of the first camera with a corresponding pixel area of the corresponding frame of the second camera, wherein the image processor is further configured to process the unused frame of the first camera with the corresponding frame of the second camera so as to determine depth and distance of objects within the predetermined pixel area of the unused frame and the corresponding frame.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be better understood when read in conjunction with the following drawings where like structure is indicated with like reference numerals and in which:
Figure 1 is an illustrative view of an automotive vehicle showing the fields of view of the first and second cameras;
Figure 2 is a schematic view showing the used and unused frames of the first camera image and the corresponding frame of the second camera image;
Figure 3 is a diagram showing the operation of the system;
Figure 4 is a schematic view showing the image mapping segment identifying a region of interest, cropping the image frame and removing distortion;
Figure 5 is a diagram showing the concept of epipolar geometry; and
Figure 6 is a diagram showing the steps of a method for stereo mapping.

### DETAILED DESCRIPTION OF THE PREFERRED EMBODIMENTS

A stereo mapping system 10 and method 100 for use in an automotive vehicle 200 is provided. In particular, the stereo mapping system 10 and method 100 is configured to perform stereo mapping of cameras having different resolutions and different fields of view. The stereo mapping system 10 and method 100 is configured to provide three dimensional distance of an object relative to the automotive vehicle 200.

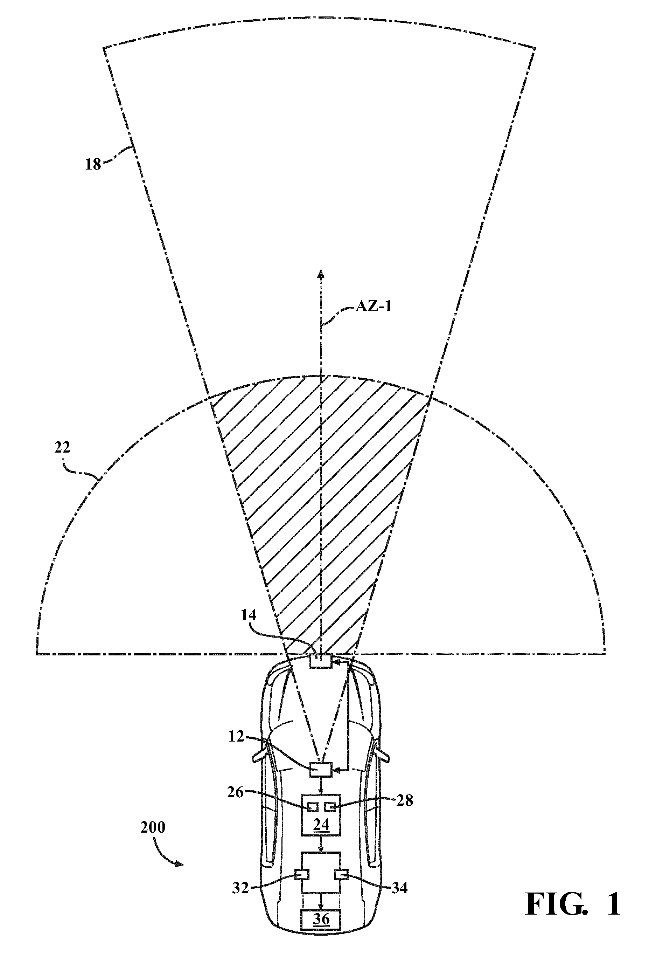

With reference now to Figure 1, an automotive vehicle 200 having a system 10 for stereo mapping is provided. The system 10 includes a first camera 12 and a second camera 14. The second camera 14 is configured to detect objects within a short range, relative to the first camera 12. In a particular aspect, the first camera 12 is configured to have a camera angle field of view of approximately 50 degrees, however, it should be appreciated that he field of view is provided for illustrative purposes and that the first camera 12 and second camera may have a field of view of greater or less degrees other than provided herein based in part upon the camera specification and system needs. In particular, the first camera can be configured to have a camera angle field of view of at least 50 degrees.

The first camera 12 is mounted on the automotive vehicle 200 so as to be disposed on a vertical and horizontal plane different than that of the second camera 14. For example and in a preferred embodiment, the first camera 12 may be mounted so as to be elevated above the second camera 14, and may further or alternatively be mounted behind the second camera 14. Thus, the images taken from each camera 12, 14 are provided at different camera angles which allows the images to have offset geometries with respect to each other. The offset geometries of the images may then be used to determine information such as distance and depth utilizing the concepts of epipolar geometry.

The first camera 12 is illustratively shown fixedly mounted to the upper portion of the windshield 210 relative to the second camera 14 and is configured to detect objects within an intermediate and long range. The first camera 12 has a first camera resolution 16 and a first field of view 18.

The second camera 14 has a second camera resolution 20 and a second field of view 22. The second camera resolution 20 is different than the first camera resolution 16. The second camera 14 is illustratively shown mounted on the front bumper 220 of the automotive vehicle 200 and disposed beneath the first camera 12. The second camera 14 is configured for use with near object recognition, near being relative to the first camera 12 which is configured for use with object recognition for objects greater in distance than the second camera 12.

The second field of view 22 is wider than the first field of view 18 and spatial resolution of the second camera 14 is greater than the spatial resolution of the first camera 12. For illustrative purposes, the first camera 12 has a resolution of 1080p whereas the second camera 14 has a resolution of 752p, and the first camera 12 is configured to provide images for object detection of objects out to 150m with a camera angle of 50 degrees, whereas the second camera 14 is configured is configured to provide images for object detection of objects out to 50m with a camera angle of 180 degrees.

Figure 1 also shows the first camera 12 being fixed to the automotive vehicle 200 so as to film at a fixed azimuth, indicated by line "AZ-1". Likewise, the second camera 14 is disposed forward of the first camera 12, relative to the automotive vehicle 200 and is also fixed to the automotive vehicle 200 so as to also film at a fixed azimuth "AZ-1". The filming azimuth is generally axial to the movement of the automotive vehicle 200, wherein the camera angle of the first and second cameras 12, 14 are bisected along the fixed azimuths "AZ-1" of the respective first and second cameras 12, 14.

With reference again to Figure 1, the system 10 further includes an image processor 24. The image processor 24 includes a first processing segment 26 and a second processing segment 28. The image processor 24, the first processing segment 26 and the second processing segment 28 may be an executable program written onto a printed circuit board or a programmable computer program downloaded onto a processor such as control unit for an active control system of an automotive vehicle 100.

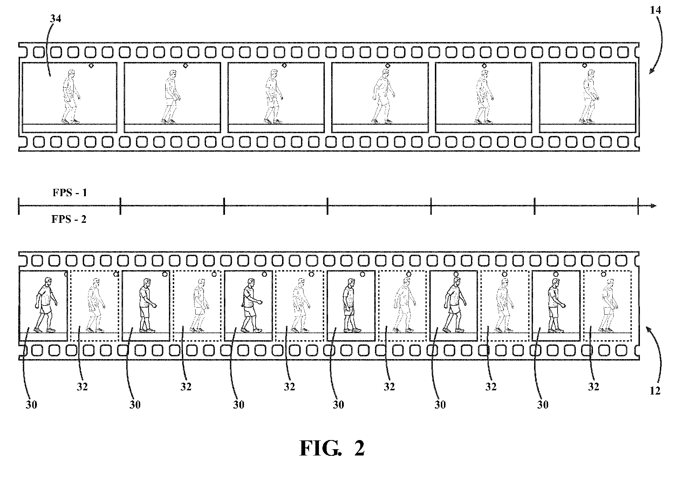

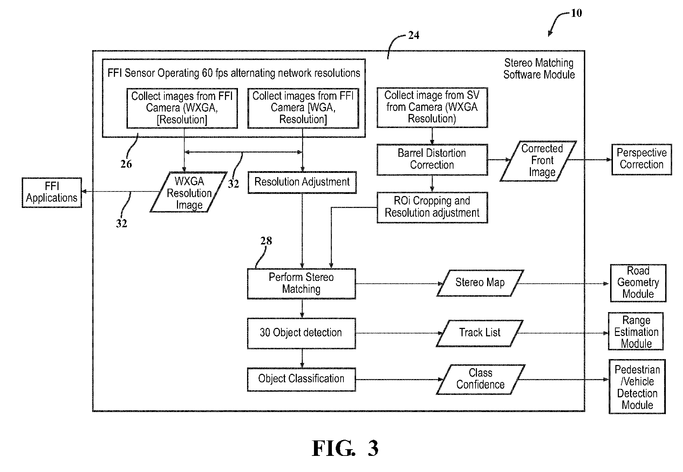

With reference again to Figure 1, and now to Figures 2 and 3, the first processing segment 26 is configured to process images of the first camera 12 so as to detect an object. Image from the first camera 12 is transmitted to the image processor 24 wherein the image processor 24 executes the first processing segment 26 to capture image frames taken by the first camera 12.

Figure 2, shows the first processing segment 26 capturing an image frame of the first camera 12 at the end of a processing period, so as to generate a used frame 30, as indicated by the dashed lines. The first processing segment 26 processes each used frame 30 so as to detect objects within each of the plurality of used frames 30. For use herein, the remaining frame of the first camera 12 images are referenced as unused frames 32. The used frames 30 are plotted with detail regarding image information and thus are larger in size with respect to data, relative to unused frame 32. The used frames 30 may be further processed for object detection applications, as shown in Figure 3.

Figure 2 also shows that the first processing segment 26 is further configured to capture image frames at different resolutions. For illustrative purposes, the first processing segment 26 is shown capturing an image frame at a first image resolution and a second image frame at a second image resolution. The second image resolution is lower than the first image resolution and is comparable to the image resolution of the second camera 14. For instance, the first image resolution may be 16 bit, whereas the second image resolution may be 8 bit, and wherein the image resolution of the second camera image frames is also 8 bit as indicated by the darker outline of the man shown in the used image frames 30, compared to the lighter outline of the man shown in the unused image frames 32, and corresponding frames 34.

The second processing segment 28 is configured to process images from the second camera 14. The second processing segment 28 processes a corresponding frame 34 of the second camera 14. For use herein, a corresponding frame 34 refers to an image frame taken by the second camera 14 that corresponds in time to an unused frame 32 of the first camera 12. The second processing segment 28 is further configured to process the corresponding frame 34 so as to match the resolution of corresponding frame 34 with the unused frame 32 of the first camera 12.

Figure 2 shows the sequential image frames taken by respective first and second cameras 12, 14. Each frame is taken at different camera rates. The first camera 12 has a first frames per second ("FPS-1"), and the second camera 14 has a second frames per second ("FPS-2"). The second frames per second FPS-2 is a multiple of the first frames per second FPS-1. For illustrative purposes, the second camera 14 is shown as generating an image frame at a rate twice as fast as the first camera 12. For instance, the first camera 12 may have a first frames per second FPS-1 rate of 60 and the second camera 14 may have a second frames per second FPS-2 of 30. Accordingly, matching an unused frame 32 with a corresponding frame 34 may require that the first processing segment 26 match its image capture with that of the rate at which an unused frame 32 is generated so as to have the images match in resolution and picture. The dashed lines show the used frame 32 and the corresponding frames 34 correlating in time. For illustrative purposes, it is assumed that the frame rate of the first camera 12 is two (2) frames per second and thus first processing segment 26 commands the second camera 14 to capture images at 1 frame per second.

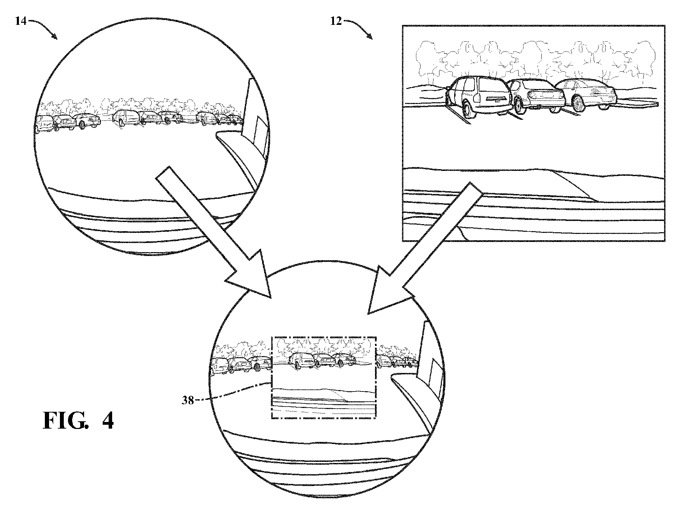

With reference again to Figure 1 and now to Figure 4, the system 10 further includes an image mapping segment 36. The image mapping segment 36 matches a predetermined pixel area of the unused frame 32 of the first camera 12 with a corresponding pixel area of the corresponding frame 34 of the second camera 14. Accordingly, the image mapping segment 36 obtains an image of the same area of spatial resolution and field of view, but taken from different views and having the same resolution.

Figure 1 shows the overlapping camera (lined section) images taken from the first camera 12 and second camera. Figure 4 shows an image taken from the first camera 12 and an image taken from the second camera 14 mapped together. The image processor 24 is configured to identify a region of interest 38 for both the first and second camera 14 images. For illustrative purposes the image processor 24 is shown identifying a region of interest 38 for a corresponding frame 34 taken by the second camera 14.

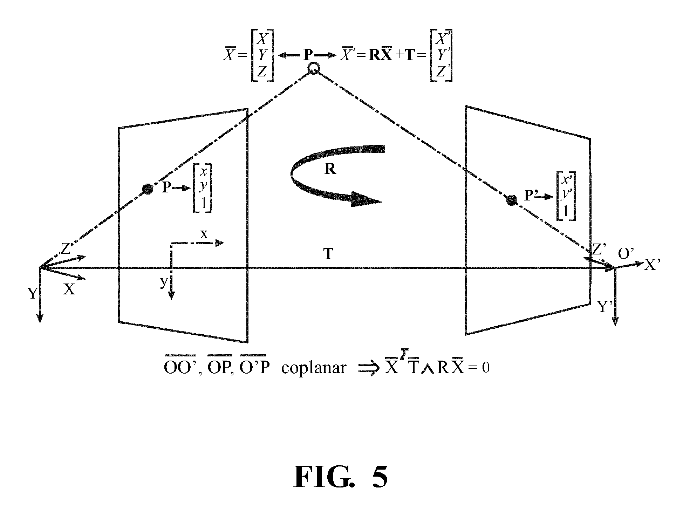

The region of interest 38 may be determine by the coincidence, identified by the lined section, between the field of views of the first and second cameras 12, 14. The region of interest 38 of the corresponding frame 34 is the same pixel area as the region of interest 38 of the unused frame 32. Accordingly, the image mapping segment 36 may utilize epipolar rectification to determine image information, the concepts of epipolar rectification are provided in Figure 5. Figure 4 also shows the image processor 24 cropping an area outside of the region of interest 38 from the corresponding frame 34 so as to reduce the amount of data processed.

The image processor 24 may be further configured to remove distortion from the cropped image. In particular, the image processor 24 may execute a software program that adjusts pixel information to remove distortion. It should be further appreciated that the image processor 24 may identify a region of interest 38, crop and remove distortion from the corresponding and unused frames 32 either before or after the second processing segment 28 matches the resolution of the corresponding frame 34 with the correlating unused frame 32. Preferably, the image processor 24 performs region of interest 38 identification, cropping and distortion removal prior to stereo mapping so as to reduce processing time.

The image processor 24 is further configured to process the unused frame 32 of the first camera 12 with the corresponding frame 34 of the second camera 14 so as to determine depth and distance of objects within the predetermined pixel area of the unused frame 32 and the corresponding frame 34. As discussed above, information such as depth, distance, and object recognition may be done by utilizing the concepts of epipolar geometry. Accordingly, information regarding range estimation of objects, road surface information and curb information may be obtained using cameras with two different resolutions.

Further, the image processor 24 is configured to alternate between a stereo mapping state and an object detection state. In the stereo mapping state the image mapping segment 36 matches the predetermined pixel area of the frame of the first camera 12 with a corresponding pixel area of the frame of the second camera 14 which correlates in time with the frame of the first camera 12. In the object detection state the image processor 24 processes the first camera 12 image to detect an object. Thus, in the instance of the object detection state, object detection is conducted and the information may be transmitted to an active control system 240 of the automotive vehicle 200. Whereas, in the instance of stereo mapping state, information about the image, such as depth, distance and the like may be determined. It should be appreciated that such information may be transmitted to the active control system to be processed with the detected object to execute an automotive vehicle 200 function such as steering, braking or the like.

With reference now to Figure 5, a diagram showing the operation of the system 10 is provided. The system 10 is implemented in an automotive vehicle 200. The image processor 24 and image mapping segment 36 may be written onto a printed circuit board and placed in electrical communication with the first and second cameras 12, 14 and the control unit 230 of an active control system 240 of the automotive vehicle 100.

Figure 5 shown images collected by the first and second cameras 12, 14 being transmitted to the image processor 24 wherein the used frames 30 are used for object detection. The unused frames 32 are sequentially processed by the image processor 24 along with a corresponding frame 34 from the second camera 14. In particular, the corresponding frame 34 is processed so as to match the resolution of an unused frame 32 correlating in time.

Figure 5 shows the used frames 30 being processed for object detection, wherein the unused frame 32 and corresponding frame 34 are transmitted to the image mapping segment 36 wherein a region of interest 38 is identified, cropping and distortion adjustments are made prior to stereo mapping. The image mapping segment 36 processes the unused frame 32 along with the corresponding frame 34 to determine spatial information relating to the camera images to include road geometry, distance to objects, and the depth of an object.

Figure 5 also demonstrates how information from the image mapping segment 36 may be used to perform tracking and object detection operations. For instance, information from the image mapping segment 36 may be used to classify objects, track the objects, and provide a certainty as to the classification of an object.

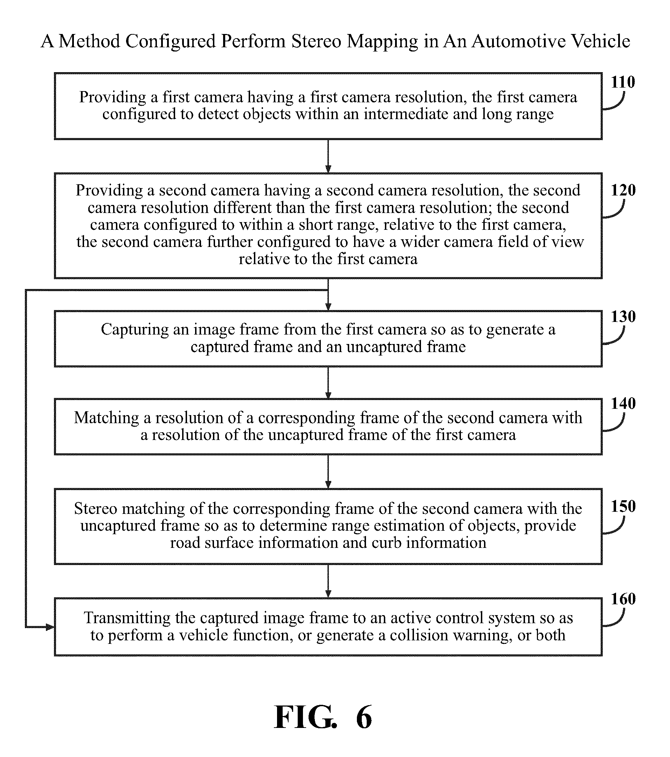

With reference now to Figure 6, method 100 configured to process perform stereo mapping is provided. The method begins with steps 110 and 120, providing a first camera 12 and a second camera 14. The first camera 12 is configured to detect objects within an intermediate and long range. The second camera 14 is configured to detect objects within a short range, relative to the first camera 12.

The first camera 12 has a first camera resolution 16 and a first field of view 18. The second camera 14 has a second camera resolution 20 and a second field of view 22, wherein the second camera resolution 20 is different than the first camera resolution 16. The second field of view 22 is wider than the first field of view 18.

The second camera 14 has a second camera resolution 20 and a second field of view 22. The second camera resolution 20 is different than the first camera resolution 16. The second camera 14 is illustratively shown mounted on the front bumper 220 of the vehicle and disposed beneath the first camera 12. The second field of view 22 is wider than the first field of view 18 and has a shorter range relative to the first camera 12.

For illustrative purposes, the first camera 12 has a resolution of 1080p whereas the second camera 14 has a resolution of 752p, and the first camera 12 is configured to provide images for object detection of objects out to 150m with a camera angle of 50 degrees, whereas the second camera 14 is configured is configured to provide images for object detection of objects out to 50m with a camera angle of 180 degrees.

The first camera 12 and the second camera 14 may be mounted on the automotive vehicle 200 so as to be disposed on a vertical and horizontal plane different than that of each other, wherein the cameras are oriented along the same azimuth so as to gather the same image but taken from different angles. For example and in a preferred embodiment, the first camera 12 may be mounted so as to be elevated above the second camera 14, and may in addition or alternatively be mounted behind the second camera 14. Thus, the images taken from each camera 12, 14 are provided at different camera angles which allows the images to have offset geometries with respect to each other. The offset geometries of the images may then be used to determine information such as distance and depth utilizing the concepts of epipolar rectification.

The method 100 includes the step 130, capturing an image frame from the first camera 12 so as to generate a used frame 30, wherein the remaining frames of the first camera 12 are unused frames 32. Step 130 may be executed by an image processor 24. The image processor 24 includes a first processing segment 26 and a second processing segment 28. The method 100 includes the step capturing an image frame from the first camera 12 and processing the used image frame so as to detect an object.

Step 130 may be executed by having the first processing segment 26 process images of the first camera 12 so as to detect an object. The first camera 12 image is transmitted to the image processor 24 wherein the image processor 24 executes the first processing segment 26 to capture image frames taken by the first camera 12 so as to generate a used image frame. The method 100 may further include step 160, transmitting the used image frame to an active control system 240 so as to perform a vehicle function, or generate a collision warning, or both.

The method 100 includes step 140, matching the resolution of a corresponding frame 34 of the second camera 14 with an unused frame 32 of the first camera 12, wherein the corresponding frame 34 corresponds in time with the unused frame 32. The step may be executed by the second processing segment 28. The second processing segment 28 processes a corresponding frame 34 of the second camera 14. For use herein, a corresponding frame 34 refers to an image frame taken by the second camera 14 that corresponds in time to an unused frame 32 of the first camera 12. The second processing segment 28 is further configured to process the corresponding frame 34 so as to match the resolution of corresponding frame 34 with the unused frame 32 of the first camera 12.

The method 100 further includes step 150, stereo matching of the corresponding frame 34 with the adjusted resolution and the unused frame 32 so as to obtain image information. The stereo matching step may be performed by an image mapping segment 36. The image mapping segment 36 matches a predetermined pixel area of the unused frame 32 of the first camera 12 with a corresponding pixel area of the corresponding frame 34 of the second camera 14. Accordingly, the image mapping segment 36 obtains an image of the same area of camera coverage, but taken from different views and having the same resolution.

The image processor 24 is further configured to process the unused frame 32 of the first camera 12 with the corresponding frame 34 of the second camera 14 so as to determine depth and distance of objects within the predetermined pixel area of the unused frame 32 and the corresponding frame 34. As discussed above, the information such as depth, distance, and object recognition may be done by utilizing the concepts of epipolar geometry. Accordingly, information regarding range estimation of objects, road surface information and curb information may be obtained using cameras with two different resolutions.

According to another aspect of the method 100, the image processor 24 may be configured to alternate between a stereo mapping state and an object detection state. In the stereo mapping state the image mapping segment 36 matches the predetermined pixel area of the a frame of the first camera 12 with a corresponding pixel area of the a frame of the second camera 14 which correlates in time with the frame of the first camera 12. In the object detection state the image processor 24 processes the first camera 12 image to detect an object. Thus, in the instance of the object detection state, object detection is conducted and the information may be transmitted to an active control system. Whereas, in the instance of stereo mapping state, information about the image, such as depth, distance and the like may be determined. It should be appreciated that such information may be transmitted to the active control system to be processed with the detected object to execute an automotive vehicle 200 function such as steering, braking or the like.

The method 100 may further include the step of identifying a region of interest 38 for each of the unused frames 32 and corresponding frame 34. The step of identifying a region of interest 38 may be executed by an image processor 24. The region of interest 38 may be determine by the coincidence, identified by the lined section, between the field of views of the first and second cameras 12, 14. The region of interest 38 of the corresponding frame 34 is the same pixel area as the region of interest 38 of the unused frame 32. Accordingly, the image mapping segment 36 may utilize epipolar geometry to determine image information.

The method 100 may further include the step of cropping an area outside of the region of interest 38 is cropped from the corresponding frame 34 and unused frame 32 so as to reduce the amount of data processed. The method 100 may further include the step of removing distortion from the corresponding frame 34 and unused frames 32. The step of cropping and distortion resolution may be executed by the image processor 24 In particular, the image processor 24 may execute a software program that adjusts pixel information to remove distortion. It should be further appreciated that the image processor 24 may identify a region of interest 38, crop and remove distortion from the corresponding and unused frames 32 either before or after the second processing segment 28 matches the resolution of the corresponding frame 34 with the correlating unused frame 32. Preferably, the image processor 24 performs region of interest 38 identification, cropping and distortion removal prior to stereo mapping so as to reduce processing time.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination.

## Claims

1. A stereo mapping system (10) for use in an automotive vehicle (200), the system configured to determine a three dimensional distance of an object relative to the automotive vehicle (200), the system comprising:
a first camera (12) having a first camera resolution;
a second camera (14) having a second camera resolution, the second camera resolution different than the first camera resolution;
an image processor (24) having a first processing segment (26) and a second processing segment (28), the first processing segment (26) configured to capture a frame of the first camera (12) to as to generate a used frame (30) and an unused frame (32), wherein the image processor (24) is configured to process the used frame (30) for object detection, the second processing segment (28) configured to process the second camera (14), wherein the second processing segment (28) processes a corresponding frame (34) of the second camera (14), the corresponding frame (34) corresponding in time to the unused frame (32) of the first camera (12), so as to match a resolution of the corresponding frame (34) with a resolution of the unused frame (32) of the first camera (12); and
an image mapping segment (36), the image mapping segment (36) matching a pixel area of the unused frame (32) of the first camera (12) with a corresponding pixel area of the corresponding frame (34) of the second camera (14), wherein the image processor (24) is further configured to process the unused frame (32) of the first camera (12) with the corresponding frame (34) of the second camera (14) so as to determine range estimation of objects.

2. The stereo mapping system as set forth in claim 1, wherein the first processing segment (26) processes an image from the first camera image at a first rate, and wherein the second processing segment (28) processes an image from the second camera image at a second rate, the first rate being twice the second rate.

3. The stereo mapping system as set forth in claim 1 or claim 2, wherein the first camera (12) has a first frames per second and the second camera (14) has a second frames per second, the first frames per second is a multiple of the second frames per second, wherein an image resolution of the unused frame (32) is the same as the image resolution of the corresponding image frame (34).

4. The stereo mapping system as set forth in any of the preceding claims, wherein image processor (24) is further configured to alternate between a stereo mapping state and an object detection state, wherein in the stereo mapping state the image mapping segment (36) matches a predetermined pixel area of a frame of the first camera (12) with a corresponding pixel area of a frame of the second camera (14) correlating in time with the frame of the first camera (12), and wherein in the object detection state the first processor processes the first camera image to detect an object.

5. The stereo mapping system as set forth in any of the preceding claims, wherein the image processor (24) is further configured to identify a region of interest (38) for both the first and second camera images, the region of interest (38) being the same pixel area, and wherein an area outside of the region of interest (38) is cropped from the images so as to reduce the amount of data processed, and wherein the cropped images are further processed to remove distortion.

6. The stereo mapping system as set forth in any of the preceding claims, wherein the first camera is configured to have a camera angle field of view of at least 50 degrees.

7. The stereo mapping system as set forth in any of the preceding claims, wherein the first camera resolution is greater than the second camera resolution, in particular wherein the first camera resolution is 1080p and the second camera resolution is 752p..

8. The stereo mapping system as set forth in any of the preceding claims, wherein the first camera (12) is fixed to the automotive vehicle (200) so as to film at a fixed azimuth, and wherein the second camera (14) is disposed forward of the first camera (12) and is fixed to the automotive (200) vehicle so as to film at the fixed azimuth.

9. A method for use in an automotive vehicle (200), the method configured to perform stereo mapping, the method comprising the steps of:
providing a first camera (12) having a first camera resolution, the first camera (12) configured to detect objects within an intermediate and long range;
providing a second camera (14) having a second camera resolution, the second camera resolution different than the first camera resolution; the second camera configured to detect objects within a short range, relative to the first camera (12), the second camera (14) further configured to have a wider camera field of view relative to the first camera;
capturing an image frame from the first camera (12) and processing the used image frame (30) so as to detect an object, wherein an image processor (24) having a first processing segment (26) and a second processing segment (28) is provided, the first processing segment (26) configured to capture a frame of the first camera (12) so as to generate a used frame (30) and an unused frame (32), wherein the image processor (24) is configured to process the used frame (30) for object detection;
matching a resolution of a corresponding frame (34) of the second camera (14) with a resolution of the unused frame (32) of the first camera (12), the second processing segment (28) configured to process the second camera (28), wherein the second processing segment (28) processes a corresponding frame (34) of the second camera (14), the corresponding frame (34) corresponding in time to the unused frame (32) of the first camera (12), so as to match the resolution of corresponding frame (34) with the unused frame (32) of the first camera (12); and
stereo mapping of the corresponding frame (34) with the unused frame (32) so as to obtain image information, wherein an image mapping segment matches a predetermined pixel area of the unused frame (32) of the first camera (12) with a corresponding pixel area of the corresponding frame (34) of the second camera (14), wherein the image processor (24) is further configured to process the unused frame (32) of the first camera (12) with the corresponding frame (34) of the second camera (14) so as to determine range estimation of objects.

10. The method for use in an automotive vehicle as set forth in claim 9, further including the step of the first processing segment (26) processing the first camera image at a first rate, and the second processing segment (28) processing the second camera image at a second rate, the second rate being twice the first rate.

11. The method for use in an automotive vehicle as set forth in claim 9 or claim 10, wherein the first camera (12) has a first frames per second and the second camera (14) has a second frames per second, the first frames per second is a multiple of the second frames per second, wherein an image resolution of the unused frame (32) is the same as the image resolution of the corresponding image frame (34).

12. The method for use in an automotive vehicle as set forth in an of the three preceding claims, further including the step of the image processor (24) alternating between a stereo mapping state and an object detection state, wherein in the stereo mapping state the image mapping segment (36) matches the predetermined pixel area of the a frame of the first camera (12) with a corresponding pixel area of the a frame of the second camera (14) correlating in time with the frame of the first camera (12), and wherein in the object detection state the first processor processes the first camera image to detect an object.

13. The method for use in an automotive vehicle as set forth in any of the four preceding claims, further including the step of the image processor (24) identifying a region of interest (38) for both the first and second camera images, the region of interest (38) being the same pixel area, and cropping an area outside of the region of interest (38) so as to reduce the amount of data processed, and removing distortion from the cropped images.

14. The method for use in an automotive vehicle as set forth in any of the five preceding claims, wherein the first camera resolution is greater than the second camera resolution, in particular wherein the first camera resolution is 1080p and the second camera resolution is 752p.

15. The method for use in an automotive vehicle as set forth in any of the six preceding claims, wherein the first camera (12) is fixed to the automotive vehicle (200) so as to film at a fixed azimuth, and wherein the second camera (14) is disposed forward of the first camera (12) and is fixed to the automotive vehicle (200) so as to film at the fixed azimuth.
